# EUROPEAN PATENT APPLICATION

(11) **EP 3 654 603 A1**
(43) Date of publication of application: **20.05.2020**
(21) Application number: 18000902.9
(22) Date of filing: 15.11.2018
(51) Int. Cl.: H04L 29/06, H04L 9/32

(54) **TRUSTED TIMESTAMPING FOR IOT DEVICES**

(71) Applicant: Giesecke+Devrient Mobile Security GmbH, 81677 München (DE)
(72) Inventor: Tea, Vui Huang, SE-12061 Stockholm (SE)

(57) **Abstract**

The present invention is directed towards a method for trusted timestamping for Internet of Things end devices which allows the creation of a timestamp which is reliable and temper-proof. The present invention is furthermore directed towards a system for trusted timestamping corresponding to the suggested method. Moreover, a computer program product is suggested arranged to perform the described method and likewise arranged to operate the suggested system.

## Description

The present invention is directed towards a method for trusted timestamping for Internet of Things end devices which allows the creation of a timestamp which is reliable and temper-proof. The present invention is furthermore directed towards a system for trusted timestamping corresponding to the suggested method. Moreover, a computer program product is suggested arranged to perform the described method and likewise arranged to operate the suggested system.

EP 2 592 807 B1 discloses a method using timestamps for revocation for tokens. This publication furthermore refers to Time Stamping Authorities TSA. Moreover, commonly known aspects of SIM cards are provided by this publication.

It is commonly known in the art to provide so-called Time Stamping Authorities TSA, which create a reliable infrastructure for creation and distribution of timestamps. Such infrastructures are, for instance, described by the so-called European Telecommunications Standards Institute ETSI.

ETSI TS 102 023 is available in several versions, for instance V1.2.2, and describes electronic signatures and infrastructures along with policy requirements for Time Stamping Authorities.

ETSI TS 101 861 is likewise available in several versions, for instance version VI.4.1. This document describes electronic signatures and infrastructures along with a timestamping profile.

It is commonly known in the art to operate a so-called Internet of Things which connects objects of everyday use and assigns them a specific address. Hence, such objects are coupled and exchange data. However, such end devices being involved in the so-called Internet of Things do not comprise powerful hardware components but are rather lightweight and can be easily manipulated. Consequently, there is a problem regarding the reliability of data provided by respective end devices.

For the timestamp on any data from an IoT device to be trusted and provable to any third party, the timestamping has to be stored on the IoT device itself prior to leaving the device. The method described herein uses a uniquely composed data created by the SIM applet that is sent to a Trusted Third Party (TTP) Time Stamping Authority (TSA) to obtain a trusted timestamp data. The end result is forwarded to an application server and can be published in a blockchain ledger for future scrutiny by any third party.

Application providers require a "timestamp" and/or integrity protection for a SIM applet. This will lock in the initial values generated by a sensor with a time and date stamp that can be used for future checks and reference, especially for insurance companies in cases of healthcare, for example. The values will be stored in a blockchain and/or server.

The prior art is that a SIM applet uses a SIM Toolkit to communicate with the IoT device to request for local information. According to 3GPP specifications, when the terminal issues a successful TERMINAL RESPONSE for a PROVIDE LOCAL INFORMATION (PLI) command, it shall supply the requested local information: Where the UICC has requested the date, time and time zone, the TERMINAL RESPONSE shall contain the Date-Time and Time zone data object.

### Date-time and time zone

| **Byte(s)** | **Description** | **Length** |
|---|---|---|
| 1 | Date-Time and Time zone tag | 1 |
| 2 | Length = '07' | 1 |
| 3 to 9 | Date-Time and Time zone | 7 |

The problem with this is that this information can be easily changed and compromised on the device. It is therefore untrusted and has no value. Likewise not all IoT devices support this command. Either do they publish the wrong information (e. g. wrong time zone), or perpetually an unchanging, fixed date time. E.g. 12 noon, 1^{st} January 1970.

Summarizing the above issues, there is a problem that reliable timestamps are required and moreover, an infrastructure needs to be established which allows end devices of the so-called Internet of Things to create and use reliable timestamps.

It is an object of the present invention to provide an improved method for trusted timestamping for Internet of Things end devices along with an active system for trusted timestamping for Internet of Things devices, which solves the above-mentioned problems. It is also an object of the present invention to provide a computer program product comprising control instructions arranged to perform the suggested method and operate the suggested system.

The object is solved by means of independent claims. Further advantages are provided by the dependent claims.

Accordingly, a method for trusted timestamping for Internet of Things devices is suggested comprising the steps of sending a hash value of sensor data from the device to a trusted timestamping applet, creating a timestamp-signing-request packet comprising the devices SIM Card Identification, at least one random number and the hash value of the sensor data, generating a further hash value of the created timestamp signing-request packet, receiving a trusted timestamping signature of the timestamp signing-request packet after sending the timestamp signing-request packet to a Time Stamping Authority, sending the timestamp signing-request packet and the trusted timestamping signature to an application server, and veryfying the timestamp signing-request packet and the trusted timestamping signature and attaching them to a blockchain.

The suggested method allows trusted timestamping as the specific method steps allow that a timestamp is not merely provided by the end device but rather the general procedure involves a further timestamping server which can be operated by a Time Stamping Authority. It is suggested to perform very specific method steps that rely on hash values and make sure that a novel approach is delivered that guaranties that no third party can manipulate the timestamp. While parts of the suggested method may already be known in the art, the overall steps and specifically the suggested order of steps along with security features provides a technical contribution.

The method is especially tailored towards end devices of the so-called Internet of Things. Such end devices typically do not comprise powerful hardware components but are able to perform only a limited number of method steps and moreover, only a limited bandwidth is available. Hence, the communication steps are specifically designed in the context of the Internet of Things approach considering lightweight end devices.

Sending a hash value of sensor data implies that first of all sensor data is fetched from at least one sensor of the device. The device may be any component being involved in the so-called Internet of Things and consequently, comprise several sensors. This sensor data is read out and hashed afterwards. The trusted timestamping applet may be a SIM applet and may be operated on the SIM card as such. The SIM card may be of any format such as a Universal Integrated Circuit Card or an embedded Universal Integrated Circuit Card. In general, the SIM can likewise be called secure element and consequently, the terminology of SIM and secure element can be used interchangeably.

In a further step, creating a timestamp signing-request packet is created which is transferred to the Time Stamping Authority. The timestamp signing-request packet comprises data such as the devices SIM card identification, at least one random number and the hash value of the sensor data. The timestamp signing-request packet may comprise further data and can likewise be referred to as timestamp packet. This is due to the fact that the request packet is used for sending the data to be signed to the Time Stamping Authority and demanding that the Time Stamping Authority signs the timestamp packet. Consequently, once the timestamp signing-request packet is to be verified, the request is already accomplished and consequently, the same packet may then be called timestamp packet. This is merely introduced for clarity issues as after the request is fulfilled the same terminology is likewise used. For instance, the timestamp signing-request packet is verified in a final step after the underlying data is already signed.

The SIM card identification may be read out from the SIM card and is used to identify the specific hardware component. Moreover, a random number may be created on the SIM card and introduced into the timestamp signing-request packet. Finally, a hash value of the sensor date, which is previously created, is likewise included in the timestamp signing-request packet.

Once the timestamp signing-request packet is created, a further hash value is created over this data. Hence, a further security mechanism is introduced. The hash value is created in the same passion as the hash value over the sensor data but the further hash value is created over the SIM card identification, the at least one random number and the hash value of the sensor data.

The timestamp signing-request packet is then transmitted to the Time Stamping Authority which is operating a server and consequently, the timestamp signing-request packet- is transmitted to a Time Stamping Authority server. This may be accomplished using a network such as the internet. Typically, the end device communicates over a wireless telecommunications network.

Upon receiving the timestamp signing-request packet by the Time Stamping Authority, a trusted timestamping signature is provided by the Time Stamping Authority. Moreover, the Time Stamping Authority provides the timestamp which is finally used. Consequently, the timestamp signing-request packet does not need to comprise a timestamp as this timestamp would be created by the device which is not trustworthy. The request packet is created by the end device and transmitted to the Time Stamping Authority which delivers the required timestamp which again is bound to the sensor data which is transmitted to the Time Stamping Authority or at least a hash value thereof.

Once the trusted timestamping signature is created and received by the end device, sending the timestamp signing-request packet and the trusted timestamping signature to an application server is performed. The application server is the server which finally requires a timestamp from the end device and consequently, receives the timestamp signing-request packet and the trusted timestamping signature which can then be verified.

In a final step, verifying the timestamp signing-request packet and the trusted timestamping signature is accomplished by the application server and the respective data is attached to a blockchain. A blockchain is a cryptographic list comprising several items. By attaching the timestamp signing-request packet and the trusted timestamping signature to a blockchain, this data is secured and can no longer be manipulated. Consequently, the timestamp is created in a trustworthy infrastructure, namely the Time Stamping Authority server, and transmitted in a safe way to the application server which is able to verify the respective data. In this case the trusted timestamping signature is verified which is bound to the timestamp signing-request packet which again is bound to the sensor data as a hash value thereof is included in the timestamp signing-request packet.

In case the timestamp of the sensor date is positively verified, the application server is able to use the sensor data along with the timestamp and in case a negative verification is performed, the timestamp can be discarded.

According to an aspect of the present invention, the sensor data is created by at least one sensor of the device. This provides the advantage that an Internet of Things device can be secured regarding its timestamp and consequently, the sensor data is created in one single component and can be immediately processed by the device. Hence, a timestamp of the device can be created using the further infrastructure as the device and respective timestamps may be insecure.

According to a further aspect of the present invention, the sensor data is provided by at least one temperature sensor, proximity sensor, pressure sensor, water quality sensor, chemical sensor, gas sensor, smoke sensor, and/or infrared sensor. This provides the advantage that any end device of the Internet of Things can be handled according to the present invention. Moreover, the provided sensors can be combined or arranged in parallel such that the end device comprises sensors of several categories.

According to a further aspect of the present invention, the device collects the sensor data and creates the hash value. This provides the advantage that the sensor data can be hashed immediately and consequently, no intermediate communication steps are performed which would make the overall process insecure.

According to a further aspect of the present invention, the devices SIM card identification may be provided as a Mobile Subscriber Integrated Services Digital Network Number MSISDN, an Integrated Circuit Card Identifier IC-CI, and/or an International Mobile Subscriber Identity IMSI. This provides the advantage that data can be used for identification of the device which is typically already stored on the device and/or the SIM card, respectively. Hence, no further information has to be provided than the one already stored on the device or the SIM card.

According to a further aspect of the present invention, the at least one random number is created by a SIM card's on-board random number generator. This provides the advantage that the packet can be secured and, for instance, replay attacks can be prevented.

According to a further aspect of the present invention, the devices communicates over a wireless interface. This provides the advantage that so-called Over The Air OTA services can be provided and respective communication channels can be established. Such a communication channel may, for instance, use further protocols such as the Internet Protocol IP.

According to a further aspect of the present invention, the trusted timestamping signature includes a timestamp issued by the Time -Stamping Authority. This provides the advantage that the final timestamp which is relevant for the application server is created using the Time Stamping Authority which is in general trustworthy. Consequently, the hash value over the sensor data is provided to the Time Stamping Authority and a respective timestamp is created which is bound to the sensor data.

According to a further aspect of the present invention, verifying the timestamp signing-request packet and the trusted timestamping signature comprises verifying certificates provided by the Time Stamping Authority. This provides the advantage that further mechanisms being provided by the Time Stamping Authority can be used, such as certificates or even a chain of certificates.

According to a further aspect of the present invention, verifying the timestamp signing-request packet and the trusted timestamping signature comprises creating a hash value over the sensor data and combining it with the devices SIM card identification and at least one random number. This provides the advantage that a verifying unit can calculate the respective data and compare the received data with the one being calculated afterwards and upon a match the timestamp is positively verified.

According to a further aspect of the present invention, an interface is provided to a blockchain infrastructure. This provides the advantage that no additional blockchain has to be implemented but rather existing infrastructures can be reused.

According to a further aspect of the present invention, verifying the timestamping packet and the trusted timestamping signature is performed using a smart contract. This provides the advantage that the verification process can be performed automatically and specific rules are implemented which allow the verification of a specific contract. In this way no human intervention is required.

According to a further aspect of the present invention, the SIM is provided as an Integrated Universal Circuit Card or an embedded Integrated Universal Circuit Card. This provides the advantage that commonly known formats can be used in this application scenario and a secure element can be used for confidential processing steps.

The present invention is directed towards so-called IoT devices. Such devices which are settled in the domain of the Internet of Things, require timestamping to fulfil several requirements, for instance integrity protection. In general, timestamping is security relevant and accordingly there is always a need for reliable and secure timestamps even in further application domains. For providing timestamps, several architectures and protocols are implemented, which is a research task for several years. However, the application domain of the Internet of Things is relatively new, which imposes further requirements as Internet of Things devices typically do not comprise extensive hardware resources.

These IoT devices need to provide reliable timestamps meaning that the timestamp as such cannot be amended once it is issued. This likewise refers to the owner, namely the one who creates the timestamp, and accordingly the timestamp has to be protected. Hence, there is a Problem that, according to the inventor, existing frameworks merely provide timestamps which can be easily changed and compromised on the device. Such timestamps cannot be used in the further process as they are not reliable and accordingly are useless. There is a further problem referring to the IoT devices, namely that such devices often do not support respective standards and existing solutions cannot be applied.

This means that even in case solutions are provided, there is still the problem that such solutions cannot be implemented in the application domain of the Internet of Things. Accordingly, there is a need for providing further solutions aiming at trusted timestamping.

The Solution is a protocol, which allows that the process of supplying timestamps can be tracked and further changes of the timestamp are prevented. The suggested protocol involves a so-called Time Stamping Authority TSA and a signature, amongst others. For providing a secure element the SIM is used especially a SIM applet. Moreover, hash values are involved. The invention report suggests further processes to be performed between the SIM card, the IoT device, the Time Stamping Authority and an application server. Data integrity is established using a so-called block chain.

The Advantage of the suggested invention is that trusted timestamping can be performed using IoT devices. No adaptions regarding the underlying hardware are required.

The object is also solved by a system for trusted timestamping for Internet of Things devices, comprising an interface arranged to send a hash value of sensor data from the device to a trusted timestamping applet, a completion unit arranged to create a timestamp signing-request packet comprising the devices SIM card identification, at least one random number and the hash value of the sensor data, a cryptographic unit arranged to generate a further hash value of the created timestamp signing-request packet, a further interface arranged to receive a trusted timestamping signature of the timestamp signing-request packet after sending the timestamp signing-request packet to a Time Stamping Authority, a network component arranged to send the timestamp signing-request packet and the trusted timestamping signature to an application server, and a verification unit arranged to verify the timestamp signing-request packet and the trusted timestamping signature and attach them to a blockchain.

The person skilled in the art recognizes that the interface units can be provided as a single interface or as separate interfaces. Further network components may be required.

The object is also solved by a computer program product comprising instructions being arranged to perform the suggested method steps and to operate the suggested system.

It is an advantage of the present invention that the suggested method is able to operate the suggested system and the system is able to perform the method steps. Consequently, the method steps can be performed by structural features of the system which provide the same functionality as the suggested method steps. The structural features of the system provide functionality which corresponds to the suggested method steps.

Further advantages will be demonstrated by means of the accompanying figures, which show:
- Fig. 1:: a block diagram depicting a communication flow within the system for trusted timestamping according to a first aspect of the present invention;
- Fig. 2:: a block diagram depicting a communication flow within the system for trusted timestamping according to a second aspect of the present invention;
- Fig. 3:: a block diagram depicting a communication flow within the system for trusted timestamping according to a third aspect of the present invention;
- Fig. 4:: a block diagram depicting a communication flow within the system for trusted timestamping according to a forth aspect of the present invention; and
- Fig. 5:: a flowchart depicting the method for trusted timestamping.

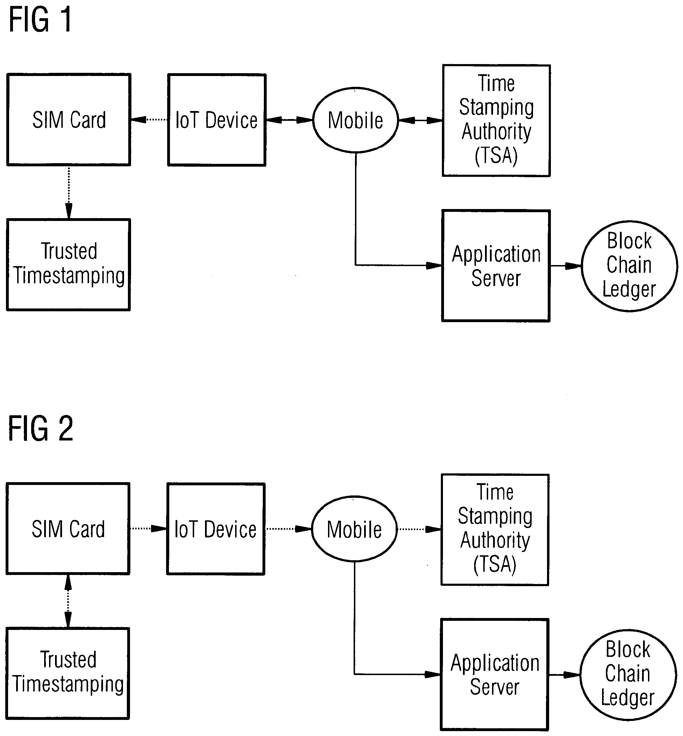

Throughout Figures 1-4 the following procedure is implemented, wherein specific stages of the method are demonstrated by each of the provided Figures 1-4. Actual communication flow between the involved entities is indicated by dotted lines. In general, the suggested communication flow leads to trusted timestamping and overcomes the problem of the prior art that typically an end device can be easily manipulated.

The solution is to use Trusted timestamping, this is the process of securely keeping track of the creation and modification time of a document. Security here means that no-one - not even the owner of the document - should be able to change it once it has been recorded provided that the timestamper's integrity is never compromised.

To send the IoT data to the application server the following steps may be performed according to an aspect of the present invention.
1. The IoT device collects and hashes the IoT device sensor data, then sends the hash to the Trusted Timestamping applet.
2. The SIM applet composes a timestamp packet consisting of the SIM card's MSISDN/ICCID/IMSI, and random numbers obtained from the SIM card's on-board hardware random number generator (HRNG) and the hash of the sensor data. It then generates a hash of this timestamp packet.
3. The SIM applet uses IP-OTA to open a communication channel to the mobile network, and sends this timestamp packet to the Time Stamping Authority (TSA), it receives in response a trusted timestamp signature of the data packet. If a custom data-optimizing proxy is used and is aware or otherwise informed of which Time Stamping Authority (TSA) is used by the SIM applet, then the TSA certificate chain does not need to be sent to the SIM applet.
4. The SIM applet uses IP-OTA to open a communication channel to the mobile network, and sends the timestamp packet, timestamp signature to the application server. If the application is aware or otherwise informed of which Time Stamping Authority (TSA) is used by the SIM applet, then the TSA certificate chain does not need to be sent by the SIM applet.
5. The application server verifies the incoming uplink data and publishes it to a blockchain ledger, with a corresponding smart contract to verify the data.

To verify the timestamp of the sensor data in the blockchain ledger the following steps may be performed according to an aspect of the present invention:
1. The verifier verifies the timestamp packet with the timestamp signature and the Time Stamping Authority (TSA) certificate chain.
2. The verifier hashes the IoT device sensor data and combines it with the SIM card's MSISDN/ICCID/IMSI, and random numbers. The verifier then hashes it again and verifies the timestamp signature with this hash.

Fig. 1 shows the communication flow on the left-hand side between the Internet of Things device, the SIM card and the trusted timestamping applet. In between the device, the Time Stamping Authority TSA and the application server a mobile telecommunications network may be implemented, which is introduced by the terminology "mobile".

IoT device collects and hashes the IoT device sensor data, then sends the hash to the Trusted Timestamping applet.

Fig. 2 shows the communication flow especially between the trusted timestamping applet, the SIM card, the Internet of Things device, the mobile network and the Time Stamping Authority TSA.

The Trusted Timestamping applet appends the SIM card's MSISDN/ICCID/IMSI and random numbers obtained from the SIM card's on-board hardware random number generator (HRNG) and the sensor data. It then generates a hash of this timestamp packet, and sends it to the Time Stamping Authority (TSA)

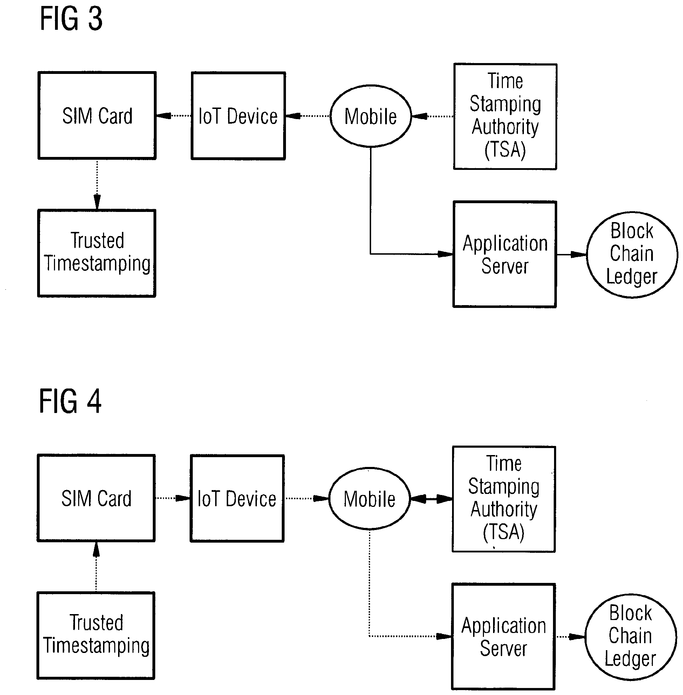

Fig. 3 depicts on the right side that the Time Stamping Authority provides a timestamp and the trusted timestamping signature is handed over to the device via the mobile network.

The Time Stamping Authority (TSA) timestamps the hash and returns the timestamp signature to the Trusted Timestamping applet.

Fig. 4 shows the verification process and that the final results are attached to a blockchain as can be seen on the right-hand side of Fig. 4.

The Trusted Timestamping applet sends the timestamp packet and timestamp signature to the application server. The application server verifies the IoT device sensor data with the timestamped data and publishes them to the blockchain. The smart contract in the blockchain contains the method for a 3^{rd} party to independently verify the timestamp on the uplinked sensor data at any point in time in the future.

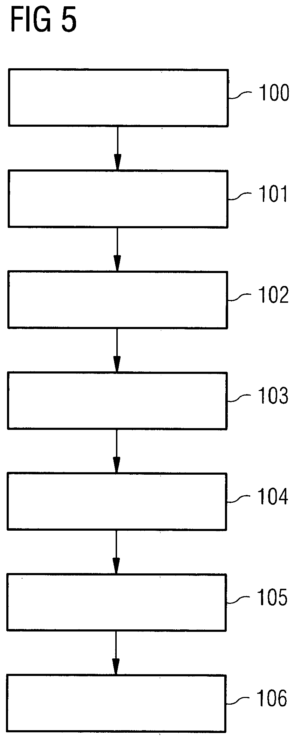

Fig. 5 shows a flowchart of a method for trusted timestamping for Internet of Things devices, comprising the steps of sending 100 a hash value of sensor data from the device to a trusted timestamping applet, creating 101 a timestamp signing-request packet comprising the device's SIM card identification, at least one random number and the hash value of the sensor data, generating 102 a further hash value of the created 101 timestamp signing-request packet, receiving 104 a trusted timestamping signature of the timestamp signing-request packet after sending 103 the timestamp signing-request packet to a Time Stamping Authority, sending 105 the timestamp signing-request packet and the trusted timestamping signature to an application server and verifying 106 the timestamp signing-request packet and the trusted timestamping signature and attaching them to a blockchain.

The person skilled in the art recognizes that the aforementioned method steps may comprise further substeps and may at least in part be performed iteratively.

## Claims

1. A method for trusted timestamping for Internet of Things devices, comprising the steps:
- sending (100) a hash value of sensor data from the device to a trusted timestamping applet;
- creating (101) a timestamp signing-request packet comprising the device's SIM card identification, at least one random number and the hash value of the sensor data;
- generating (102) a further hash value of the created (101) timestamp signing-request packet;
- receiving (104) a trusted timestamping signature of the timestamp signing-request packet after sending (103) the timestamp signing-request packet to a Time Stamping Authority;
- sending (105) the timestamp signing-request packet and the trusted timestamping signature to an application server; and
- verifying (106) the timestamp signing-request packet and the trusted timestamping signature and attaching them to a blockchain.

2. The method according to claim 1, **characterized in that** the sensor data is created by at least one sensor of the device.

3. The method according to claim 1 or 2, **characterized in that** the sensor data is provided by at least one temperature sensor, proximity sensor, pressure sensor, water quality sensor, chemical sensor, gas sensor, smoke sensor and/or infrared sensor.

4. The method according to any one of the preceding claims, **characterized in that** the device collects the sensor data and creates the hash value.

5. The method according to any one of the preceding claims, **characterized in that** the device's SIM card identification may be provided as a Mobile Subscriber Integrated Services Digital Network Number, an integrated circuit card identifier and/or an International Mobile Subscriber Identity.

6. The method according to any one of the preceding claims, **characterized in that** the at least one random number is created by a SIM card's on-board random number generator.

7. The method according to any one of the preceding claims, **characterized in that** the device communicates over a wireless interface.

8. The method according to any one of the preceding claims, **characterized in that** the trusted timestamping signature includes a timestamp issued by the Time Stamping Authority.

9. The method according to any one of the preceding claims, **characterized in that** verifying (106) the timestamp signing-request packet and the trusted timestamping signature comprises verifying certificates provided by the Time Stamping Authority.

10. The method according to any one of the preceding claims, **characterized in that** verifying (106) the timestamp signing-request packet and the trusted timestamping signature comprises creating a hash value of the sensor data and combining it with the device's SIM card identification and at least one random number.

11. The method according to any one of the preceding claims, **characterized in that** an interface is provided to a blockchain infrastructure.

12. The method according to any one of the preceding claims, **characterized in that** verifying (106) the timestamping packet and the trusted timestamping signature is performed using a smart contract.

13. The method according to any one of the preceding claims, **characterized in that** the SIM is provided as an Integrated Universal Circuit Card or an embedded Integrated Universal Circuit Card.

14. A system for trusted timestamping for Internet of Things devices, comprising:
- an interface arranged to send (100) a hash value of sensor data from the device to a trusted timestamping applet;
- a compilation unit arranged to create (101) a timestamp signing-request packet comprising the device's SIM card identification, at least one random number and the hash value of the sensor data;
- a crypto unit arranged to generate (102) a further hash value of the created (101) timestamp signing-request packet;
- a further interface arranged to receive (104) a trusted timestamping signature of the timestamp signing-request packet after sending (103) the timestamp signing-request packet to a Time Stamping Authority;
- a network component arranged to send (105) the timestamp signing-request packet and the trusted timestamping signature to an application server; and
- a verification unit arranged to verify (106) the timestamp signing-request packet and the trusted timestamping signature and attach them to a blockchain.

15. A computer program product being arranged to perform a method in accordance with any one of the preceding claims 1 to 13, when being executed on a computer.
